# EUROPÄISCHE PATENTSCHRIFT

(11) **EP 0 433 230 B1**
(45) Veröffentlichungstag und Bekanntmachung des Hinweises auf die Patenterteilung: **14.05.1997**
(21) Anmeldenummer: 90810942.4
(22) Anmeldetag: 03.12.1990
(51) Int. Cl.: C08L 57/08, C08K 5/04

(54) **Beta-Ketoester als Stabilisatoren für chlorhaltige Polymerisate**
Beta-ketoesters as stabilizers for chlorine containing polymerisates
Bêta-cétoesters comme stabilisants pour polymérisats contenant du chlore

(30) Priorität: 11.12.1989 CH 4439/89
(43) Veröffentlichungstag der Anmeldung: 19.06.1991
(60) Teilanmeldung: 96117139.4
(73) Patentinhaber: Ciba Specialty Chemicals Holding Inc., 4057 Basel (CH)
(72) Erfinder: Wehner, Wolfgang, Dr., W-6144 Zwingenberg (DE); Wirth, Hermann O., Dr., W-6140 Bensheim 3 (DE)

(56) Entgegenhaltungen:
- GB-A- 1 099 731
- EUROPEAN POLYMER JOURNAL. vol. 25, no. 12, 17 November 89, OXFORD GB & Kolesov: "Stabilization of PVC by Beta-dicarbonyl compounds"

## Beschreibung

Die vorliegende Erfindung betrifft die Verwendung von β-Ketoestern zum Stabilisieren von chlorhaltigen Polymerisaten gegen thermischen Abbau sowie die stabilisierten chlorhaltigen Polymerisate.

Es ist bekannt, dass chlorhaltige Polymerisate gegen den schädigenden Einfluss von Licht und Wärme, insbesondere bei der Verarbeitung zu Formteilen, geschützt werden müssen. Einige β-Ketoester und deren Verwendung als Co-Stabilisatoren werden beispielsweise in der EP-A 58 447, in der GB-A-1,099,731 oder in der JP-A-82/74346 beschrieben.

Die vorliegende Erfindung betrifft Zusammensetzungen enthaltend a) ein chlorhaltiges Polymerisat, b) mindestens ein Me(II)-Carboxylat und/oder Me(II)-Phenolat und/oder Me(II)-Alkylphenolat, wobei Me(II) Ba, Ca, Mg, Cd, Sr oder Zn bedeutet und c) mindestens eine Verbindung der Formel I, 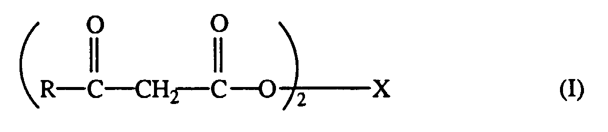 worin
R Alkyl mit 1 bis 4 C-Atomen oder Phenyl und X Alkylen mit 4 bis 12 C-Atomen, Alkylen mit 2 bis 12 C-Atomen, das mit wenigstens einer C₁-C₈-Alkylgruppe substituiert ist, -CH₂-CH₂-S-CH₂-CH₂-S-CH₂-CH₂- oder -CH₂-CH₂-S-CH₂-CH₂- darstellen.
R als Alkyl mit 1 bis 4 C-Atomen bedeutet z.B. Methyl, Ethyl, Propyl oder Butyl.
X bedeutet als C₄-C₁₂-Alkylen, resp. als C₂-C₁₂-Alkylen, das durch wenigstens eine C₁-C₈-Alkylgruppe substituiert ist, zum Beispiel 1,2-Di-tert-butyl-dimethylen, Tetramethylen, Hexamethylen, 2,2-Dimethyltrimethylen, 2-Ethyl-2-butyl-trimethylen, 2-Methyl-2-propyltrimethylen, Octamethylen, Nonamethylen, Decamethylen oder Dodecamethylen.

Zweckmässig sind Zusammensetzungen, wie vorbeschrieben, enthaltend wenigstens eine Verbindung der Formel I, worin R eine CH₃-Gruppe oder Phenyl darstellt.

Weitere zweckmässige Zusammensetzungen, wie vorbeschrieben, enthalten wenigstens eine Verbindung der Formel I, worin X Alkylen mit 4 bis 8 C-Atomen oder Alkylen mit 2 bis 8 C-Atomen, das mit ein bis drei Alkylgruppen mit 1 bis 4 C-Atomen substituiert ist, darstellt, oder besonders zweckmässig, worin X Alkylen mit 4 bis 6 C-Atomen oder Alkylen mit 2 bis 6 C-Atomen, das mit ein oder zwei Alkylgruppen mit 1 bis 4 C-Atomen substituiert ist, darstellt, oder worin X Alkylen mit 4 C-Atomen oder Alkylen mit 2 oder 3 C-Atomen, das mit ein oder zwei Alkylgruppen mit 1 bis 4 C-Atomen substituiert ist, darstellt.

Bevorzugt sind Zusammensetzungen, wie vorbeschrieben, enthaltend wenigstens eine Verbindung der Formel I, worin X

-(CH₂)₄-,

-(CH₂)₆-,

-(CH₂)₂-S-(CH₂)₂-S-(CH₂)₂-

oder 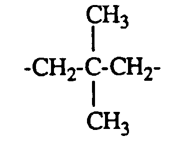 bedeutet.

Ebenfalls bevorzugt sind Zusammensetzungen, wie vorbeschrieben, enthaltend wenigstens eine Verbindung der Formel I, worin R Methyl oder Phenyl bedeutet und X Alkylen mit 4 bis 8 C-Atomen, 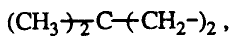 -CH₂-CH₂-S-CH₂-CH₂-S-CH₂-CH₂- oder ―CH₂-CH₂-S-CH₂-CH₂- darstellt.

Die Komponente b) ist bevorzugt ein Me(II)-Carboxylat, wobei Me(II) Ba, Ca, Mg, Cd oder Zn und insbesondere Ca, Ba oder Zn bedeutet. Bei den Carboxylaten handelt es sich bevorzugt um Salze von Carbonsäuren mit 7 bis 20 C-Atomen, z.B. Benzoate, Alkanoate oder Alkenoate, bevorzugt Stearate, Oleate, Laurate, Palmitate, Hydroxystearate oder 2-Ethylhexanoate. Besonders bevorzugt sind Octoate, Stearate, Caprylate, Oleate oder p-tert-Butylbenzoate. Bei den Carboxylaten kann es sich auch um basische Salze handeln.

Gemische aus Ba/Zn- oder Ca/Zn-Carboxylaten werden als Komponente b) ebenfalls besonders bevorzugt, wobei Ca/Zn ganz besonders bevorzugt ist.

Ca- und/oder Zn-Stearat, sowie basisches Zinkoctoat oder basisches Zinkcaprylat ist als Komponente b) ebenfalls besonders bevorzugt.

Bedeutet die Komponente b) ein Me(II)-Alkylphenolat, so handelt es sich insbesondere um C₇-C₂₀-Alkylphenolate, beispielsweise Nonylphenolat.

In einer weiteren Bevorzugung können die erfindungsgemässen Zusammensetzungen als zusätzliche Komponente d) eine Epoxyverbindung und/oder ein Phosphit enthalten.

Bei der Epoxyverbindung handelt es sich bevorzugt um epoxidierte Oele und epoxidierte Fettsäureester, z.B. epoxidiertes Sojabohnenöl, epoxidiertes Butyloleat und epoxidiertes Octyloleat.

Bei den Phosphiten handelt es sich bevorzugt um solche der Formeln 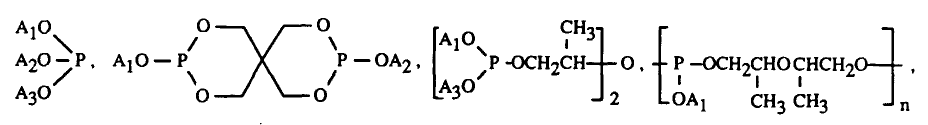 worin A₁, A₂ und A₃ unabhängig voneinander C₁-C₁₈-Alkyl, C₆-C₁₈-Alkenyl, C₅-C₇-Cycloalkyl, Phenyl oder durch ein bis drei C₁-C₁₂-Alkylgruppen substituiertes Phenyl bedeuten.

Beispiele sind Trioctyl-, Tridecyl-, Tridodecyl-, Tritetradecyl-, Tristearyl-, Trioleyl-, Triphenyl-, Trikresyl-, Tris-p-nonylphenyl- und Tricyclohexylphosphit. Bevorzugt sind die Aryldialkyl- sowie die Alkyl-diaryl-phosphite, wie z.B. Phenyldidecyl-, (2,4-Di-tert-butylphenyl)di-dodecyl-,(2,6-Di-tert-butylphenyl)didodecyl-phosphit und die Dialkyl- und Diaryl-pentaerythrit-diphosphite, wie z.B. Distearylpentaerythrit-diphosphit. Ebenfalls bevorzugt sind die Tetraphenyl- und Tetraalkyl-[di-propylenglykol-1,2]-diphosphite und die Poly-[dipropylenglykol-1,2-phenylphosphite] sowie die Poly-[dipropylenglykol-1,2-alkylphosphite].

Besonders bevorzugte organische Phosphite sind Distearyl-pentaerythrit-diphosphit, Tris-(nonylphenyl)phosphit, Phenyldidecylphosphit, Tetraphenyl-[dipropylenglykol-1,2]-diphosphit und Poly-[dipropylenglykol-1,2-phenylphosphit].

Die Me(II)-Carboxylate oder -Phenolate können in dem zu stabilisierenden Material in einer dem Fachmann bekannten Konzentration vorliegen, wie zum Beispiel in Mengen von 0,05 bis 5 Gew.%.

Die Phosphite werden z.B. in Konzentrationen von 0,3 bis 5, vorzugsweise 0,5 bis 1 Gew.% und die Epoxyverbindungen, wie z.B. das epoxidierte Sojabohnenöl, zweckmässig in Konzentrationen von 1 bis 8, vorzugsweise 1 bis 3 Gew.% eingesetzt.

Die Verbindungen der Formel I werden beispielsweise in Mengen von 0,05 bis 5, bevorzugt 0,05 bis 1, insbesondere 0,1 bis 0,7 Gew.% in das chlorhaltige Polymerisat eingearbeitet.

Die Angabe Gew.% bezieht sich jeweils auf das zu stabilisierende Material.

Bei den chlorhaltigen Polymerisaten handelt es sich bevorzugt um Vinylchloridhomopolymere oder-copolymere. Als Comonomere für die Copolymerisate kommen z.B. in Frage: Vinylacetat, Vinylidenchlorid, Transdichlorethen, Ethylen, Propylen, Butylen, Maleinsäure, Acrylsäure, Fumarsäure, Itaconsäure. Weitere geeignete chlorhaltige Polymere sind nachchloriertes PVC und chlorierte Polyolefine, ferner Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere mit ABS, MBS, NBR, SAN, EVA.

Weiterhin bevorzugt sind Suspensions- und Massepolymere sowie Emulsionspolymere.

Als chlorhaltiges Polymerisat ist Polyvinylchlorid besonders bevorzugt.

Je nach dem Verwendungszweck der Polymerisate können vor oder bei der Einarbeitung der Stabilisatoren auch weitere Zusätze eingearbeitet werden, wie zum Beispiel phenolische Antioxidantien, Gleitmittel (bevorzugt Montanwachse oder Glycerinester, Fettsäureester, Paraffine, Amidwachse, Stearinsäure, Mono- und Dihydroxystearinsäure, höhere Fettalkohole), Weichmacher, Füllstoffe, Russ, Asbest, Kaolin, Talk, Glasfasern, Modifikatoren (wie etwa Schlagzäh-Zusätze), Verarbeitungshilfen (z.B. Polymethacrylsäureester), optische Aufheller, Pigmente, Lichtschutzmittel, UV-Absorber, Flammschutzmittel oder Antistatika.

Als organische Weichmacher kommen beispielsweise solche aus den folgenden Gruppen in Betracht:
A) Phthalate (Phthalsäureester)
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexylphthalat (DOP).
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester,
   beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.
D) Polymerweichmacher Eine Definition dieser Weichmacher und Beispiele für solche sind im "Plastics Additives Handbook", Herausgeber H. Gächter und H. Müller, Hanser Publishers, 1985, Seite 284, Kapitel 5.7.10 sowie in "PVC Technology", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol und C₉-C₁₁-Alkanolgemische. Besonders vorteilhaft sind Polyesterweichmacher aus den genannten Dicarbonsäuren und monofunktionellen Alkoholen.
E) Phosphorsäureester
   Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethylhexyl-di-phenylphosphat, Kresyldiphenylphosphat, Triphenylphosphat, Trikresylphosphat und Trixylenylphosphat. Bevorzugt ist Tri-2-ethylhexyl-phosphat.
F) Chlorierte Kohlenwasserstoffe (Paraffine)
G) Kohlenwasserstoffe
H) Monoester, z.B. Butyloleat, Phenoxyethyloleat, Tetrahydrofurfuryloleat und Alkylsulfonsäureester.
I) Glycolester, z.B. Diglykolbenzoate.

Definitionen und Beispiele für Weichmacher der Gruppen F) bis I) sind den folgenden Handbüchern zu entnehmen:
"Plastics Additives Handbook", Herausgeber H. Gächter und H. Müller, Hanser Publishers, 1985, Seite 284, Kapitel 5.7.11 (Gruppe F)), und Kapitel 5.7.13 (Gruppe G)).
"PVC Technology", Herausgeber W.V. Titow, 4th. Ed., Elsevier Publishers, 1984, Seiten 171-173, Kapitel 6.10.2 (Gruppe F)), Seite 174, Kapitel 6.10.5 (Gruppe G)), Seite 173, Kapitel 6.10.3 (Gruppe H)) und Seiten 173-174, Kapitel 6.10.4 (Gruppe I)).

Besonders bevorzugt sind Weichmacher aus den Gruppen A) bis E), insbesondere A) bis C), vor allem die in diesen Gruppen als bevorzugt herausgestellten Weichmacher. Besonders günstig ist Di-2-ethylhexylphthalat (DOP).

Die Weichmacher können in einer Menge von beispielsweise 15 bis 70, zweckmässig 15 bis 60 und insbesondere 20 bis 50 Gew.-Teilen, bezogen auf 100 Gew.-Teile Polymerzusammensetzung, angewendet werden.

Weitere mögliche Zusätze sind ferner β-Aminocrotonate, z.B. die in DE-A-804 442, DE-A-807 207 und JP-A-75/17454 beschriebenen Verbindungen, Pyrrole, z.B. die in EP-A-22 087 angegebenen Verbindungen, Aminouracile, z.B. die in EP-A-65 934 offenbarten Verbindungen, Aminothiouracile, z.B. die aus EP-A-41 479 bekannten Verbindungen, Polyole, z.B. die in DE-A-3 019 910 beschriebenen Verbindungen, β-Diketone, z.B. die in DE-A-2 600 516 angegebenen Verbindungen, oder auch Gemische aus β-Diketonen und Hydrotalciten, wie z.B. in EP-A-63 180 beschrieben.

Die Einarbeitung der Stabilisatorkomponenten in das chlorhaltige Polymerisat erfolgt am günstigsten, wie üblich, auf einem Mischwalzwerk, z.B. einem 2-Walzenstuhl bei Temperaturen zwischen 150° und 200°C. Im allgemeinen lässt sich eine genügende Homogenisierung innerhalb von 5 bis 15 Minuten erreichen. Die Zugabe der Komponenten kann einzeln oder gemeinsam als Vorgemisch erfolgen. Als zweckmässig hat sich ein flüssiges Vorgemisch erwiesen, d.h. es wird in Gegenwart von indifferenten Lösungsmitteln und/oder Weichmachern gearbeitet.

Die Verbindungen c) gemäss vorliegender Erfindung zeigen gute Löslichkeit in Stabilisator-Systemen auf Basis flüssiger Metallseifen, z.B. in basischem Zn-caprylat, in basischem Zn-octoat und/oder epoxidierten Fettsäureestern. Dies macht die Verbindungen c) gemäss vorliegender Erfindung besonders wertvoll.

Die Verbindungen der Formel I sind bekannt oder können in Analogie zu bekannten Verfahren oder durch Umesterung eines β-Ketosäureesters, z.B. des Ethyl- oder Methylesters mit einem geeigneten Alkohol hergestellt werden.

Vorliegende Erfindung betrifft ferner die Verwendung von Verbindungen der Formel I, wie vorbeschrieben, zum Stabilisieren von chlorhaltigen Polymerisaten, welche mindestens ein Me(II)-carboxylat und/oder Me(II)-Phenolat mit Me(II) = Ba, Ca, Mg, Cd, Sr oder Zn enthalten, gegen thermischen Abbau.

Die folgenden Beispiele erläutern die Erfindung weiter. Teile- und Prozentangaben beziehen sich darin, soweit nichts anderes angegeben ist, auf das Gewicht.

Beispiel 1: Butandiol-1,4-bis-benzoylacetat

In einem 250 ml-Dreihalskolben werden 22,0 g (0,25 Mol) Butandiol-1,4 und 192,0 g (1,0 Mol) Ethyl-benzyolacetat auf 150°C erhitzt. Nach 3 h haben sich 23,0 g (berechnet 23,0 g) Ethanol abgeschieden. Anschliessend werden bei 10⁻³ Torr bei 96,1 g (berechnet 96,6 g) flüchtige Bestandteile - hauptsächlich überschüssiger Ketoester - abgezogen. Der destillierte Rückstand (85,6 g) wird mit Ether digeriert, wobei farblose Kristalle vom Fp. 75°C resultieren.

Ausbeute: 46,1 g entsprechen 48,2 % der Theorie.

Beispiel 2: Butandiol-1,4-bis-acetoacetat

Präparation analog Beispiel 1. Reaktandenmolverhältnis = 4:1, Reaktionszeit 1 Stunde.

Ausbeute: 85 % der Theorie (Kp.: 166-170°C/< 10⁻³)

Beispiel 3: Hexandiol-1,6-bis-acetoacetat

Präparation analog Beispiel 1. Reaktandenmolverhältnis = 4:1, Reaktionszeit 4 Stunden.

Ausbeute: 77,4 % der Theorie (Kp.: 173-175°C/< 10⁻³)

Beispiel 4: Neopentylglykol-bis-acetoacetat

Präparation analog Beispiel 1. Reaktandenmolverhältnis = 4:1, Reaktionszeit 4 Stunden.

Ausbeute: 82,8 % der Theorie (Kp.: 153-156°C/< 10⁻³)

Beispiel 5 (-CH₂SC₂H₄O₂CCH₂COC₆H₅)₂

Präparation analog Beispiel 1. Reaktandenmolverhältnis = 4:1, Reaktionszeit 3 Stunden.

Ausbeute: 62,6 % der Theorie (Fp.: 55°C - aus Toluol/Petrolether)

Beispiel 6: (-CH₂SC₂H₄O₂CCH₂COCH₃)₂

Präparation analog Beispiel 1. Reaktandenverhältnis = 4,6:1,
Reaktionszeit 4 Stunden.

Ausbeute: 78,2 % der Theorie (Fp.: 26°C - aus Methanol)

Beispiel 7: S(̵C₂H₄O₂CCH₂COC₆H₅)₂

Präparation analog Beispiel 1. Reaktandenverhältnis = 4:1,
Reaktionszeit 3 Stunden.

Ausbeute: quantitativ (viskoses Öl; n_{D}²⁰= 1,5749)

(In Beispielen 2 bis 7 ist das Acetoacetat immer im Ueberschuss)

Beispiel 8: Eine Trockenmischung bestehend aus
- 100,0 Teilen: Emulsionspolymerisat mit K-Wert 57 (Polyvinylchlorid),
- 4,0 Teilen: epoxidiertem Sojabohnenöl,
- 0,39 Teilen: Ca-Stearat,
- 0,15 Teilen: Zn-Stearat,
- 0,1 Teilen: Polyethylenwachs (äusseres Gleitmittel),
- 0,5 Teilen: PVC-Verarbeitungshilfe (processing aid) auf Basis von Polymethylmethacrylat,
- 8,0 Teilen: Methyl-Butadien-Styrol-Schlagzähmacher (impact modifier),
- 0,6 Teilen: Fettalkoholgemisch (C₁₆-C₁₈) und teiloxidiertem PE-Wachs (inneres Gleitmittel),
- 0,3 Teilen: Diisodecylphenylphosphit und
- 0,6 Teilen: eines Costabilisators (Verbindung c)) nach der Erfindung
wird auf einem Mischwalzwerk 5 Minuten bei 180°C gewalzt. Vom gebildeten 0,3 mm dicken Walzfell werden Folienmuster in einem Trockenschrank bei 180°C thermisch belastet. Der Yellowness Index (YI) der Proben wird in regelmässigen Zeitabständen nach ASTM D 1925 bestimmt. Die Ergebnisse sind in Tabelle 1 aufgeführt.

**Tabelle 1:**

| YI-Werte in 5 Minuten-Intervallen | | | | | | | | | |
|---|---|---|---|---|---|---|---|---|---|
| Verbindung c) gemäss Beispiel | Minuten | | | | | | | | |
| | 0 | 5 | 10 | 15 | 20 | 25 | 30 | 35 | 40 |
| 1 | 6,3 | 7,9 | 9,3 | 10,6 | 13,1 | 18,8 | 32,5 | 78,9 | 98,1 |

Beispiel 9: Aus der Trockenmischung gemäss Beispiel 8 wird eine Pressplatte hergestellt, wobei während einer Minute bei 180°C ein Druck von 200·10⁵ PA angewendet wird. Die Pressplatte weist einen Yellowness Index (YI) nach ASTM D 1925 von 27,6 auf.

Beispiel 10: Eine Trockenmischung bestehend aus
- 100,0 Teilen: Suspensionspolymerisat K-Wert 64 (Polyvinylchlorid),
- 3,0 Teilen: epoxidiertem Sojabohnenöl,
- 0,35 Teilen: Ca-Stearat,
- 0,15 Teilen: Zn-Stearat,
- 0,55 Teilen: Didecylphenylphosphit und
- 0,65 Teilen: eines Costabilisators (Verbindung c)) gemäss der Erfindung
wird auf einem Mischwalzwerk 5 Minuten bei 180°C gewalzt. Vom gebildeten 0,3 mm dicken Walzfell werden Folienmuster in einem Trockenschrank bei 180°C thermisch belastet. Der Yellowness Index (YI) der Proben wird in regelmässigen Zeitabständen nach ASTM D 1925 bestimmt. Die Ergebnisse sind in Tabelle 2 aufgeführt.

**Tabelle 2:**

| YI-Werte in 5 Minuten-Intervallen | | | | | | | | | |
|---|---|---|---|---|---|---|---|---|---|
| | Verbindung c) gemäss Beispiel | Minuten | | | | | | | |
| | | 0 | 5 | 10 | 15 | 20 | 25 | 30 | 35 |
| (Vergleich) | ohne | 19,5 | 27,3 | 30,4 | 38,6 | 34,3 | 34,7 | 53,8 | 85,2 |
| | 2 | 2,8 | 5,6 | 6,9 | 11,3 | 15,4 | 24,8 | 43,1 | 62,7 |

Beispiel 11: Aus der Trockenmischung gemäss Beispiel 10 wird eine Pressplatte hergestellt, wobei während einer Minute bei 180°C ein Druck von 200·10⁵ PA angewendet wird. Die Pressplatte weist einen Yellowness Index (YI) nach ASTM D 1925 von 16,0 auf.

Beispiel 12: Eine Trockenmischung bestehend aus
- 100,0 Teilen: Suspensionspolymerisat K-Wert 70(Polyvinylchlorid),
- 17,0 Teilen: Dioctylphthalat,
- 3,0 Teilen: epoxidiertem Sojabohnenöl,
- 0,15 Teilen: Zn-Stearat,
- 2,0 Teilen: flüssigem Ba-/Zn-Stabilisator und
- 0,2 Teilen: Costabilisator (Verbindung c)) gemäss der Erfindung
wird auf einem Mischwalzwerk 5 Minuten bei 190°C gewalzt. Vom gebildeten 0,3 mm dicken Walzfell werden Folienmuster in einem Testofen (®Mathis-Thermotester) bei 180°C thermisch belastet. Im angegebenen Zeitintervall wird an einem Prüfmuster der Yellowness Index (YI) nach ASTM D 1925 bestimmt. Die Ergebnisse sind in Tabelle 3 aufgeführt.

**Tabelle 3:**

| YI-Werte in 5 Minuten-Intervallen | | | | | | | | | | | | | | |
|---|---|---|---|---|---|---|---|---|---|---|---|---|---|---|
| Verb. c) gem. Bsp. | Minuten | | | | | | | | | | | | | |
| | 0 | 5 | 10 | 15 | 20 | 25 | 30 | 35 | 40 | 45 | 50 | 55 | 60 | 65 |
| 2 | 5,2 | 6,9 | 8,9 | 10,9 | 19,8 | 15,9 | 17,5 | 18,4 | 18,1 | 18,4 | 18,2 | 17,9 | 17,9 | 19,1 |

Beispiel 13: Eine Trockenmischung bestehend aus
- 100,0 Teilen: Polyvinylchlorid (®Solvic 264 GA),
- 3,0 Teilen: epoxidiertem Sojabohnenöl,
- 0,35 Teilen: Ca-Stearat,
- 0,15 Teilen: Zn-Stearat,
- 0,55 Teilen: Diisodecyl-phenylphosphit und
- 0,3 Teilen: Costabilisator (Verbindung c)) gemäss der Erfindung
wird auf einem Mischwalzwerk 5 Minuten bei 180°C gewalzt. Vom gebildeten 0,3 mm dicken Walzfell werden Folienmuster in einem Testofen (®Mathis-Thermotester) bei 180°C thermisch belastet. Im angegebenen Zeitintervall wird an einem Prüfmuster der Yellowness Index (YI) nach ASTM D 1925 bestimmt Die Ergebnisse sind in Tabelle 4 aufgeführt.

**Tabelle 4:**

| YI-Werte in 5 Minuten-Intervallen | | | |
|---|---|---|---|
| Verb. c) gem. Bsp. | Minuten | | |
| | 0 | 5 | 10 |
| ohne | 18,9 | 25,8 | 30,9 |
| 1 | 3,0 | 4,0 | 5,7 |
| 5 | 2,8 | 4,2 | 6,0 |

## Patentansprüche

1. Zusammensetzung enthaltend
a) ein chlorhaltiges Polymerisat,
b) mindestens ein Me(II)-Carboxylat und/oder Me(II)-Phenolat und/oder Me(II)-Alkylphenolat, wobei Me(II) Ba, Ca, Mg, Cd, Sr oder Zn bedeutet und
c) mindestens eine Verbindung der Formel I, 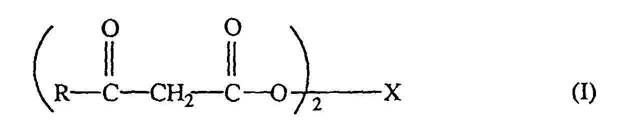 worin R Alkyl mit 1 bis 4 C-Atomen oder Phenyl und X Alkylen mit 4 bis 12 C-Atomen, Alkylen mit 2 bis 12 C-Atomen, das mit wenigstens einer C₁-C₈-Alkylgruppe substituiert ist, -CH₂-CH₂-S-CH₂-CH₂-S-CH₂-CH₂- oder -CH₂-CH₂-S-CH₂-CH₂- darstellen.

2. Zusammensetzung nach Anspruch 1, enthaltend wenigstens eine Verbindung der Formel I, worin R CH₃ oder Phenyl darstellt.

3. Zusammensetzung nach Anspruch 1, enthaltend wenigstens eine Verbindung der Formel I, worin X Alkylen mit 4 bis 8 C-Atomen oder Alkylen mit 2 bis 8 C-Atomen, das mit ein bis drei Alkylgruppen mit 1 bis 4 C-Atomen substituiert ist, darstellt.

4. Zusammensetzung nach Anspruch 3, enthaltend wenigstens eine Verbindung der Formel I, worin X Alkylen mit 4 bis 6 C-Atomen oder Alkylen mit 2 bis 6 C-Atomen, das mit ein oder zwei Alkylgruppen mit 1 bis 4 C-Atomen substituiert ist, darstellt.

5. Zusammensetzung nach Anspruch 3, enthaltend wenigstens eine Verbindung der Formel I, worin X Alkylen mit 4 C-Atomen oder Alkylen mit 2 oder 3 C-Atomen, das mit ein oder zwei Alkylgruppen mit 1 bis 4 C-Atomen substituiert ist, darstellt.

6. Zusammensetzung nach Anspruch 1, enthaltend wenigstens eine Verbindung der Formel I, worin X
-(CH₂)₄-,
-(CH₂)₆-,
-(CH₂)₂-S-(CH₂)₂-S-(CH₂)₂-
oder 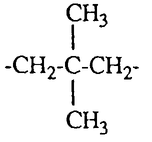 darstellt.

7. Zusammensetzung nach Anspruch 1, enthaltend wenigstens eine Verbindung der Formel I, worin R Methyl oder Phenyl bedeutet und X Alkylen mit 4 bis 8 C-Atomen, 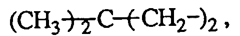 -CH₂-CH₂-S-CH₂-CH₂-S-CH₂-CH₂- oder ―CH₂-CH₂-S-CH₂-CH₂- darstellt.

8. Verwendung von Verbindungen der Formel I nach Anspruch 1 zum Stabilisieren von chlorhaltigen Polymerisaten, welche mindestens ein Me(II)-Carboxylat und/oder Me(II)-Phenolat und/oder Me(II)-Alkylphenolat mit Me(II) = Ba, Ca, Mg, Cd, Sr oder Zn enthalten, gegen thermischen Abbau.

## Claims

1. A composition comprising
a) a chlorine-containing polymer,
b) at least one Me(II) carboxylate and/or Me(II) phenolate and/or Me(II) alkylphenolate, where Me(II) is Ba, Ca, Mg, Cd, Sr or Zn, and
c) at least one compound of formula (I) 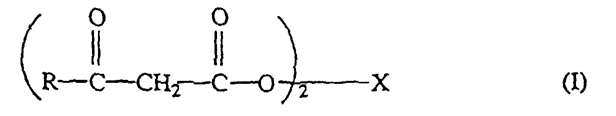 wherein R is alkyl of 1 to 4 carbon atoms or phenyl, and X is alkylene of 4 to 12 carbon atoms, alkylene of 2 to 12 carbon atoms which is substituted by at least one C₁-C₈alkyl group, or is -CH₂-CH₂-S-CH₂-CH₂-S-CH₂-CH₂- or -CH₂-CH₂-S-CH₂-CH₂-.

2. A composition according to claim 1 comprising at least one compound of formula I wherein R is CH₃ or phenyl.

3. A composition according to claim 1 comprising at least one compound of formula I wherein X is alkylene of 4 to 8 carbon atoms or alkylene of 2 to 8 carbon atoms which is substituted by one to three alkyl groups of 1 to 4 carbon atoms.

4. A composition according to claim 3 comprising at least one compound of formula I wherein X is alkylene of 4 to 6 carbon atoms or alkylene of 2 to 6 carbon atoms which is substituted by one or two alkyl groups of 1 to 4 carbon atoms.

5. A composition according to claim 3 comprising at least one compound of formula I wherein X is alkylene of 4 carbon atoms or alkylene of 2 or 3 carbon atoms which is substituted by one or two alkyl groups of 1 to 4 carbon atoms.

6. A composition according to claim 1 comprising at least one compound of formula I wherein X is
-(CH₂)₄-,
-(CH₂)₆-,
-(CH₂)₂-S-(CH₂)₂-S-(CH₂)₂-
or

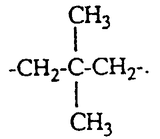

7. A composition according to claim 1 comprising at least one compound of formula I wherein R is methyl or phenyl and X is alkylene of 4 to 8 carbon atoms, (CH₃-)₂-C-(-CH₂-)₂, -CH₂-CH₂-S-CH₂-CH₂-S-CH₂-CH₂- or -CH₂-CH₂-S-CH₂-CH₂-.

8. The use of a compound of formula I according to claim 1 to stabilize chlorine-containing polymers which comprise at least one Me(II) carboxylate and/or Me(II) phenolate and/or Me(II) alkylphenolate, where Me(II) is Ba, Ca, Mg, Cd, Sr, or Zn, against thermal degradation.

## Revendications

1. Compositions contenant :
(a) un polymère chloré,
(b) au moins un Me(II)-carboxylate et/ou Me(II)-phénolate et/ou Me(II )-alkylphénolate, Me(II) étant Ba, Ca, Mg, Cd, Sr ou Zn et
(c) au moins un composé de formule I : 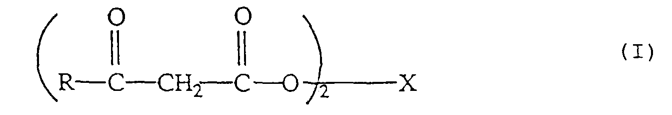 dans laquelle R représente alkyle avec 1 à 4 atomes de carbone ou phényle et X représente alkylène avec 4 à 12 atomes de carbone, alkylène avec 2 à 12 atomes de carbone, qui est substitué par au moins un groupe alkyle en C₁-C₈, -CH₂-CH₂-S-CH₂-CH₂-S-CH₂-CH₂- ou -CH₂-CH₂-S-CH₂-CH₂-.

2. Composition selon la revendication 1, contenant au moins un composé de formule I où R représente CH₃ ou phényle.

3. Composition selon la revendication 1, contenant au moins un composé de formule I, où X est un alkylène avec 4 à 8 atomes de carbone ou alkylène avec 2 à 8 atomes de carbone, qui est substitué par 1 à 3 groupes alkyle avec 1 à 4 atomes de carbone.

4. Composition selon la revendication 3, contenant au moins un composé de formule I, où X est un alkylène avec 4 à 6 atomes de carbone ou alkylène avec 2 à 6 atomes de carbone, qui est substitué par 1 ou 2 groupes alkyle avec 1 à 4 atomes de carbone.

5. Composition selon la revendication 3, contenant au moins un composé de formule I, où X est un alkylène avec 4 atomes de carbone ou alkylène avec 2 ou 3 atomes de carbone, qui est substitué par 1 ou 2 groupes alkyle avec 1 à 4 atomes de carbone.

6. Composition selon la revendication 1, contenant au moins un composé de formule I
-(CH₂)₄-,
-(CH₂)₆-,
-(CH₂)₂-S-(CH₂)₂-S-(CH₂)₂-
ou

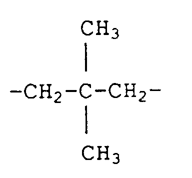

7. Composition selon la revendication 1, contenant au moins un composé de formule I où R représente méthyle ou phényle et X représente alkylène avec 4 à 8 atomes de carbone (CH₃)₂-C-(CH₂-)₂, -CH₂-CH₂-S-CH₂-CH₂-S-CH₂-CH₂-ou -CH₂-CH₂-S-CH₂-CH₂-.

8. Utilisation des composés de formule I selon la revendication 1 pour la stabilisation de polymères chlorés qui contiennent au moins un Me(II)-carboxylate et/ou Me(II)-phénolate et/ou Me(II)-alkylphénolate, Me(II) étant Ba, Ca, Mg, Cd, Sr ou Zn, contre la dégradation thermique.
